# EUROPEAN PATENT SPECIFICATION

(11) **EP 2 672 683 B1**
(45) Date of publication and mention of the grant of the patent: **01.10.2014**
(21) Application number: 12170947.1
(22) Date of filing: 06.06.2012
(51) Int. Cl.: H04M 1/725, H04M 19/04

(54) **Method, system and apparatus for providing notifications**
Verfahren, System und Vorrichtung zur Bereitstellung von Benachrichtigungen
Procédé, appareil et système pour fournir des notifications

(43) Date of publication of application: 11.12.2013
(73) Proprietor: BlackBerry Limited, Waterloo, ON N2K 0A7 (CA)
(72) Inventor: Talukdar, Taneem, Ahmed, Waterloo, Ontario N2L 3W8 (CA)
(74) Representative: MERH-IP Matias Erny Reichl Hoffmann

(56) References cited:
- EP-A1- 2 239 696
- WO-A1-2006/108288
- WO-A2-2011/087599
- US-A1- 2008 294 727

## Description

### FIELD

The specification relates generally to communication devices, and specifically to a method, system and apparatus for providing notifications.

### BACKGROUND

Electronic communication devices, such as smart phones, are capable of sending and receiving a variety of electronic communications, such as emails, telephone calls, and instant messages. The ubiquity of such communications, however, can result in wasteful repeated notifications being generated by the devices, consuming computational resources.
EP 2 239 696 A1 discloses a method for silencing notifications for a message thread. WO 2006/108288 A1 discloses a method for customizing notifications in a mobile electronic device.
WO 2011/087599 A2 discloses a method for configuring a device to place the device in silence mode and to make exceptions to the silence mode.
US 2008/0294727 A1 discloses a method related to unsubscribing from notification of future messages in an existing message thread.

### GENERAL

According to an aspect of the specification, a method is provided in a communication device having a processor, a memory and at least one output device, the method comprising: executing a notification application at the processor to receive a watch instruction generated at the processor via execution of an other application, the watch instruction including an identifier of the other application and an identifier for a subset of data stored in association with the other application; storing the watch instruction in the memory; executing the notification application at the processor to receive a notification request generated at the processor via execution of the other application, the notification request including an application identifier and a data identifier; determining at the processor whether the data identifier matches the subset identifier and whether the application identifier matches the identifier of the other application; and, when the determination is affirmative, controlling the at least one output device at the processor to generate a notification signal according to override notification settings stored in the memory in association with the watch instruction.

According to another aspect of the specification, a non-transitory computer readable medium is provided storing a plurality of computer readable instructions executable by a processor of a communication device having a memory and at least one output device, for implementing the above method.

According to a further aspect of the specification, a communication device is provided, comprising: a memory; at least one output device; and a processor interconnected with the memory and the at least one output device, the processor configured to execute a notification application and an other application; the processor configured, via execution of the notification application, to receive a watch instruction generated via execution of the other application, the watch instruction including an identifier of the other application and an identifier for a subset of data stored in association with the other application; the processor further configured to store the watch instruction in the memory; the processor further configured, via execution of the notification application, to receive a notification request generated via execution of the other application, the notification request including an application identifier and a data identifier; the processor further configured to determine whether the data identifier matches the subset identifier and whether the application identifier matches the identifier of the other application; and, when the determination is affirmative, to control the at least one output device to generate a notification signal according to override notification settings stored in the memory in association with the watch instruction.

### BRIEF DESCRIPTIONS OF THE DRAWINGS

Embodiments are described with reference to the following figures, in which:
Figure 1 depicts a system for providing notifications, according to a non-limiting embodiment;
Figure 2 depicts a notification profile of the system of Figure 1, according to a non-limiting embodiment;
Figure 3 depicts a method of providing notifications, according to a non-limiting embodiment;
Figure 4 depicts an interface generated during the performance of the method of Figure 3, according to a non-limiting embodiment;
Figure 5 depicts an override database of the system of Figure 1, according to a non-limiting embodiment;
Figure 6 depicts a message received in the system of Figure 1, according to a non-limiting embodiment;
Figure 7 depicts an override database of the system of Figure 1, according to another non-limiting embodiment;
Figure 8 depicts an interface generated during the performance of the method of Figure 3, according to another non-limiting embodiment; and
Figure 9 depicts a continuation of the method of Figure 3, according to a non-limiting embodiment.

### DETAILED DESCRIPTION OF THE EMBODIMENTS

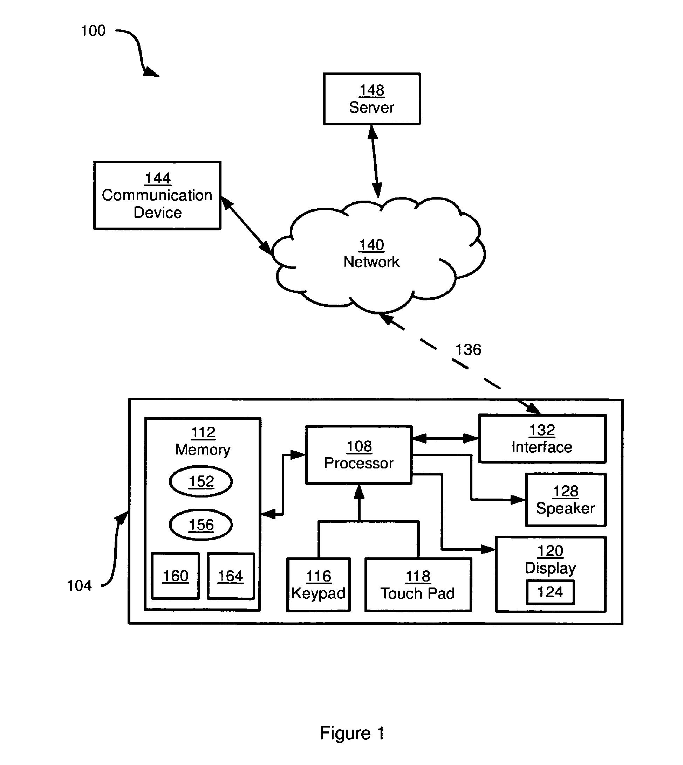

Figure 1 depicts a communications system 100. System 100 includes a communication device 104, which in the present example is based on the computing environment and functionality of a hand-held wireless communication device. Communication device 104 is not limited to a hand-held wireless communication device, however. Other devices are also contemplated, such as cellular telephones, smart telephones, Personal Digital Assistants ("PDAs"), media (e.g. MP3) players, laptop computers, tablet computers and the like. In other examples, communication device 104 can be substituted by a computing device such as a desktop computer.

Communication device 104 includes a processor 108 interconnected with a non-transitory computer readable storage medium such as a memory 112. Memory 112 can be any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory. In the present example, memory 112 includes both a volatile memory and a non-volatile memory. Other types of non-transitory computer readable storage medium are also contemplated, such as compact discs (CD-ROM, CD-RW) and digital video discs (DVD).

Communication device 104 also includes one or more input devices interconnected with processor 108. Such input devices are configured to receive input and provide data representative of such input to processor 108. Input devices can include, for example, a keypad 116 and a touch pad 118. Thus, keypad 116 can receive input in the form of the depression of one or more keys, and can then provide data representative of such input to processor 108. The data provided to processor 108 can be, for example, an American Standard Code for Information Interchange (ASCII) value for each of the depressed keys. Keypad 116 can be a full QWERTY keypad, a reduced QWERTY keypad or any other suitable arrangement of keys. Touch pad 118 can receive input in the form of depression of touch pad 118 or swipe gestures along the surface of touch pad 118, and can then provide data representative of such input to processor 108 in the form of, for example, coordinates representing the location of a virtual cursor, the direction and/or velocity of a swipe gesture, and the like.

In some examples, communication device 104 can include additional input devices in the form of one or more microphones, buttons, light sensors and the like (not shown). More generally, any suitable combination of the above-mentioned input devices can be incorporated into communication device 104.

Communication device 104 further includes one or more output devices. The output devices of communication device 104 include a display 120. Display 120 includes display circuitry 124 controllable by processor 108 for generating interfaces which include representations of data and/or applications maintained in memory 112. Display 120 includes a flat panel display comprising any one of, or any suitable combination of, a Liquid Crystal Display (LCD), a plasma display, an Organic Light Emitting Diode (OLED) display, and the like. Circuitry 124 can thus include any suitable combination of display buffers, transistors, LCD cells, plasma cells, phosphors, LEDs and the like. When the input devices of communication device 104 include a touch screen input device, the touch screen (not shown) can be integrated with display 120.

The output devices of communication device 104 can also include a speaker 128 interconnected with processor 108. Additional output devices are also contemplated, including, for example, a light-emitting indicator (not shown) in the form of a Light-Emitting Diode (LED), and a motor or other mechanical output device (not shown) for causing communication device 104 to vibrate. In general, communication device 104 can include any suitable combination of the above-mentioned output devices, and may also include other suitable output devices.

Communication device 104 also includes a communications interface 132 interconnected with processor 108. Communications interface 132 allows communication device 104 to communicate with other computing devices via a link 136 and a network 140. Network 140 can include any suitable combination of wired and/or wireless networks, including but not limited to a Wide Area Network (WAN) such as the Internet, a Local Area Network (LAN), cell phone networks, WiFi networks, WiMax networks and the like. Link 136 is compatible with network 140. In particular, link 136 can be a wireless link based on any of the Global System for Mobile communications (GSM), General Packet Radio Service (GPRS), Enhanced Data rates for GSM Evolution (EDGE), third and fourth-generation mobile communication system (3G and 4G), Institute of Electrical and Electronic Engineers (IEEE) 802.11 (WiFi) or other wireless protocols or standards. Link 136 can also include any base stations and backhaul links necessary to connect communication device 104 to network 140.

Communications interface 132 is selected for compatibility with link 136 as well as with network 140. Communications interface 132 thus includes one or more transmitter/receiver assemblies, or radios, and associated circuitry. For example, communications interface 132 can include a first assembly, or radio, for enabling communications over a WiFi network, and a second radio for enabling communications over one or more mobile telephone networks (e.g. 3G networks). In other embodiments, link 136 can be a wired link, such as an Ethernet link, and interface 132 can include suitable hardware for communicating over such a link.

It is contemplated that communication device 104 can receive communications from, and send communications to, other communication devices over link 136 and network 140. For example, system 100 can include a second communication device 144 and a server 148 connected with network 140. The nature of communications between communication device 104 and other computing devices is not particularly limited, and can include, for example, telephone calls, emails, Short Message Service (SMS) messages, Instant Message (IM) messages, and the like.

The various components of communication device 104 are contained within a housing (not shown) comprising any suitable combination of materials (e.g. aluminum, plastics, and the like). The components of communication device 104 are interconnected via a communication bus (not shown). Communication device 104 can be powered by a battery (not shown) also contained within the housing, though it will be understood that communication device 104 can also be supplied with electricity by a wired connection to a wall outlet or other power source, for example when docked. In other embodiments, where communication device 104 is in the form of a desktop computer for example, certain components need not be contained within the same housing. For example, display 120 can be housed separately from an enclosure housing processor 108 and memory 112. As a further example, keypad 116 can be replaced or supplemented by a keyboard which is housed separately from the enclosure housing processor 108 and memory 112.

Communication device 104 maintains, in memory 112, a plurality of computer readable instructions executable by processor 108. Such instructions can include, for example, an operating system and a variety of other applications. For example, as illustrated in Figure 1, communication device 104 stores a notification application 152 and a messaging application 156, which in the present embodiment is an IM application. When processor 108 executes the instructions of application 152 or 156, processor 108 is configured to perform various functions implemented by the computer readable instructions of the respective applications, as will be discussed below in greater detail. It is contemplated that memory 112 can store a variety of additional applications, such as a telephony application, a web browsing application, and the like (not shown). In the present example, it is contemplated that application 152 is a component of the operating system, though in other examples application 152 can be a separate, standalone application.

In general, processor 108 is configured, via the execution of IM application 156, to send and receive instant messages to and from other devices (such as communication device 144). When a new message is received at processor 108 via communication interface 132, processor 108 is configured, via the execution of notification application 152, to retrieve an active notification profile from a profile database 160 stored in memory 112, and to generate one or more notification signals according to the data contained within the active notification profile.

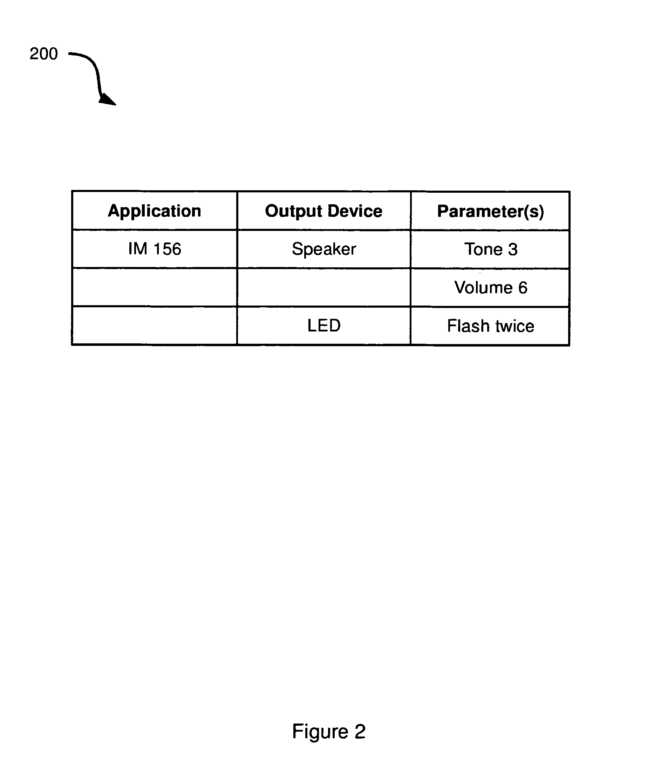

Turning to Figure 2, an example notification profile 200 is shown as stored in database 160. It is contemplate that notification profile 200 can be one of many notification profiles in database 160, and that at any given time, one of the notification profiles in database 160 is active. Profile 200 includes an identifier of an application (in this case, IM application 156), identifiers for output devices to be controlled in generating a notification signal, and one or more parameters associated with each output device identifier. Therefore, in the present example, when processor 108 receives a new instant message via the execution of IM application 156, processor 108 is configured to retrieve profile 200 and control speaker 128 and an LED (not shown) to generate a notification signal that includes playing "Tone 3" (which can be an audio file stored in memory 112) at a volume level of "6" (for example, 60% of the maximum volume of speaker 128) as well as flashing the LED twice.

It is contemplated that profile 200 can include output device identifiers and parameters for a variety of other applications in addition to application 156, as well as output identifiers and parameters that are not associated to any application (e.g. defining a "default" notification signal). In general, processor 108 is configured to receive new communications via the execution of various applications, and when a new communication is received through any of those applications, processor 108 is configured to execute notification application 152 and consult database 160 to determine the appropriate notification signal. More specifically, each of the other applications, such as application 156, can contain instructions which, when executed by processor 108, cause processor 108 to generate an Application Programming Interface (API) call for application 152, and to execute application 152 to process the API call. The API call is a request to generate a notification signal. In other words, application 156 (and other applications) effectively notifies application 152 that a new communication has arrived.

In addition to the above, referring back to Figure 1, processor 108 is configured, via the execution of notification application 152, to generate notification signals according to an override database 164 stored in memory 112 for subsets of communications received by application 156 (or any other application). For example, processor 108 can be configured to generate a notification signal according to data contained within database 164 when a new instant message is received in a certain thread via the execution of application 156, as opposed to when any instant message is received. Further discussion of override database 164 will be provided below.

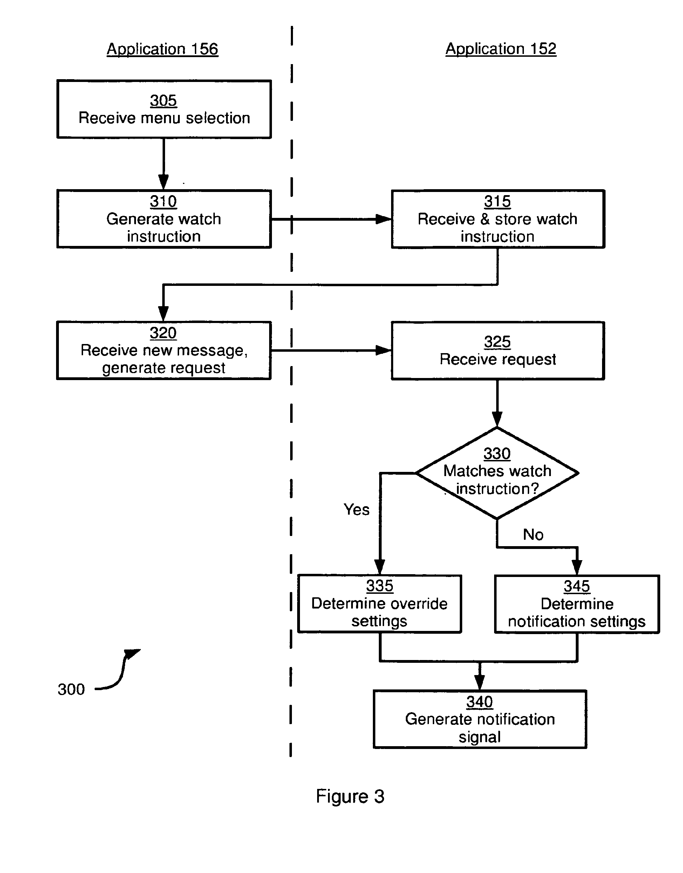

Turning now to Figure 3, a block diagram of a method 300 of providing notification signals is shown. Method 300 is performed at communication device 104, and particularly by processor 108 via the execution of applications 152 and 156. As will be discussed in further detail below, certain portions of method 300 are performed by processor 108 as configured via the execution of application 152, while others are performed by processor 108 as configured via the execution of application 156. This division is illustrated in Figure 3.

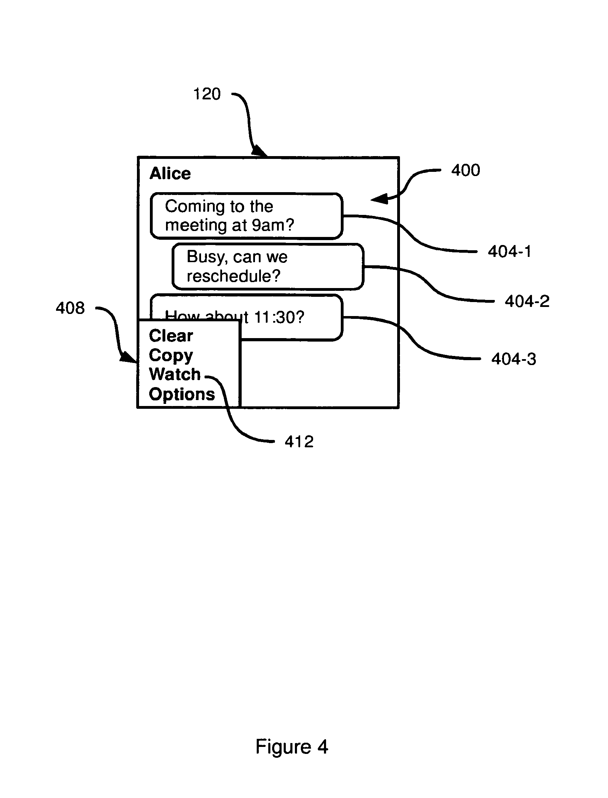

Beginning at block 305, processor 108 is configured to receive, from an input device such as touch pad 118, a selection of a menu option. It is contemplated that via execution of application 156, processor 108 can be configured to control display 120 to generate an interface including various menu options. An example of such an interface, indicated at 400, is shown in Figure 4.

Interface 400 is generated on display 120 under the control of processor 108, and includes representations of three messages received at or sent from communication device 104 via the execution of application 156. In particular, messages 404-1 and 404-3 were generated and sent from communication device 104 to communication device 144, while message 404-2 was received at communication device 104 from communication device 144. The source and received messages and destination of sent messages is identified by the contact name "Alice", or any other suitable identifier for communication device 144. Messages 404, and any other messages (not shown) received or sent in connection with application 156, are stored in memory 112 in association with application 156. Together, messages 404 comprise a subset of the messages stored in association with application 156. That subset may be referred to as a thread or a conversation.

Interface 400 also includes a representation of a menu 408. Processor 108 is configured to update interface 400 to include menu 408 in response to the receipt of input data from an input device of communication device 104, such as a key press received from keypad 116. Menu 408 includes a plurality of selectable options, including a "watch" option 412. The options of menu 408 are selectable in that processor 108 can receive input data indicating selection of one of the options from an input device. For example, touch pad 118 can be used to focus (e.g. place a cursor) on a particular option, and then depressed to select that option. Thus, at block 305, processor 108 is configured to receive input data indicative of a selection of watch option 412.

Returning to Figure 3, the performance of method 300 continues at block 310, at which processor 108 is configured to generate a watch instruction in response to the selection of watch option 412. The watch instruction generated by processor 108 at block 310 includes an identifier of application 156 and an identifier of the subset of messages in connection with which watch option 412 was selected (that is, messages 404, representations of which appeared in interface 400 with watch option 412).

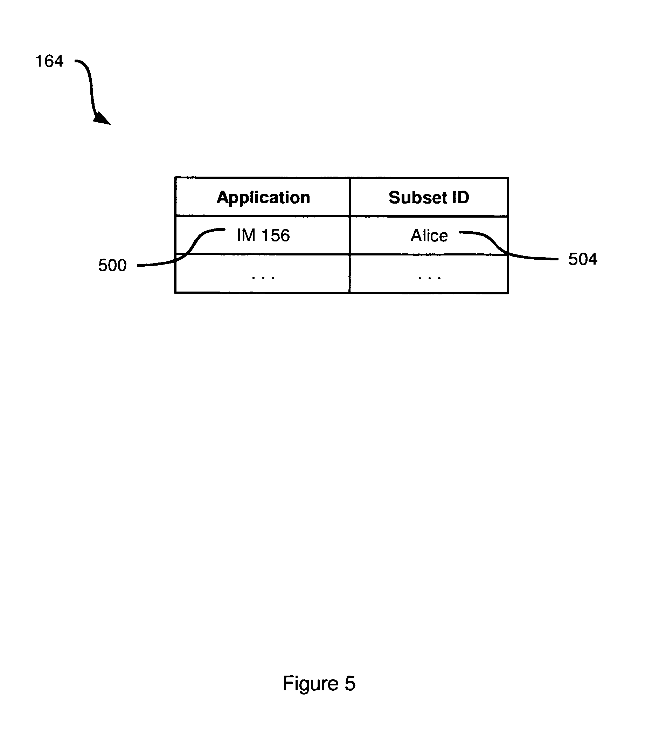

The watch instruction generated at block 310 can be an API call to application 152. Thus, at block 315, processor 108 is configured, via execution of application 152, to receive and store the watch instruction in database 164. Turning to Figure 5, an example database 164 is shown. Database 164 includes one record for each watch instruction received and thus, in the present example, database 164 includes a record containing the data in the watch instruction generated at block 310. Thus, the record shown in Figure 5 includes application identifier 500 and subset identifier 504. It is contemplated that a wide variety of application identifiers can be used, and that the identifier "IM 156" is provided solely for illustrative purposes.

From Figure 5, it will be apparent that the subset identifier corresponds to the contact name "Alice" shown at the top of interface 400. Messages 404, which are the subset of messages stored in memory 112 in association with application 156 that were identified by the watch instruction, are messages exchanged with communication device 144 which, as discussed above, can be identified by a contact name associated with communication device 144. A wide variety of subset identifiers can be generated by processor 108, depending on the nature of the messages to be identified. For example, processor 108 can be configured to select all or part of a subject field of an email when the messages are email messages. In other examples, processor 108 can be configured to generate a subset identifier comprising multiple sub-identifiers. For example, some applications can configure processor 108 to send and receive different types of messages (such as "chat" messages and "wall" messages in a Facebook™ application). For such messages, processor 108 can be configured to generate a watch instruction including a subset identifier that includes both a message type and an identifier such as a contact, thread title or the like. Other example subset identifiers include data such as the MSISDN (telephone number) or other identifier of an originating device, when the messages identified are SMS or MMS messages, for example.

More generally, processor 108 is configured to generate a subset identifier at block 310 based on the application interface from which menu option 412 was selected. In the present example, therefore, where interface 400 includes a representation of messages 404 in a conversation (or thread) with the contact "Alice", selection of menu option 412 results in the selection of the contact name as a subset identifier. Applications such as application 156 can include various menus corresponding to different interfaces (a message composition interface and a message list interface may have different menus connected thereto, for example), and the watch menu option can appear in any suitable combination of these menus.

Returning to Figure 3, the performance of method 300 continues at block 320. At block 320, processor 108 is configured, via the execution of application 156, to receive a new message. For example, communication device 144 can transmit a new instant message to communication device 104 via network 140, which is received at communications interface 132 and passed to processor 108.

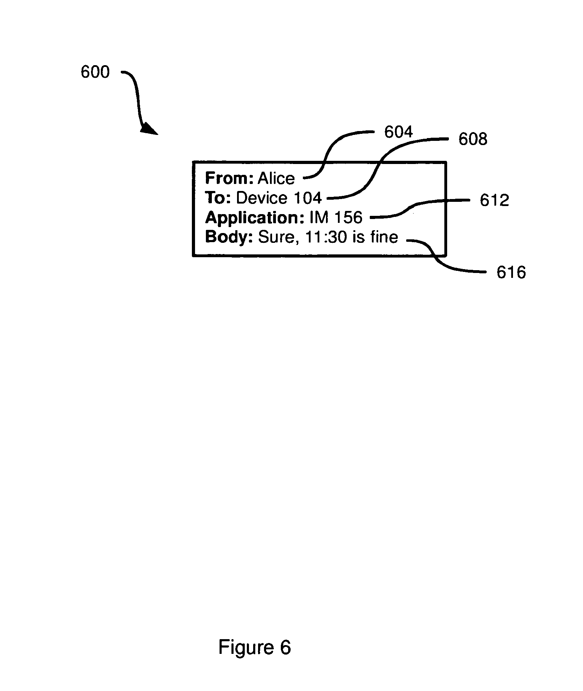

Turning to Figure 6, an example new message 600 is shown, as received from communication device 144. Message 600 includes an originator identifier 604, a recipient identifier 608, an application identifier 612, and a message body 616.

Following the receipt of the new message, processor 108 is configured, again via the execution of application 156, to generate a notification request. As mentioned above, the notification request is an API call to application 152 to generate a notification signal in response to the arrival of the new message. The notification request includes an application identifier and a message identifier. As with the subset identifiers discussed above, processor 108 can be configured to select any of a variety of potential message identifiers. In the present example, processor 108 is configured to generate a notification request including the application identifier "IM 156" and the message identifier "Alice", indicating that the new message was received from communication device 144.

Returning again to Figure 3, the performance of method 300 continues at block 325, at which processor 108 is configured, via execution of application 152, to receive the notification request generated at block 320. Proceeding then to block 330, processor. 108 is configured to determine whether the notification request matches any watch instructions stored in database 164. Thus, processor 108 is configured to compare the application identifier from message 600 to identifier 500 (and any other application identifiers in database 164), and to compare the message identifier (in the present example, originator identifier 604) to subset identifier 504. When both comparisons result in matches for any individual watch instruction in database 164, the determination at block 330 is affirmative, indicating that the new message matches a stored watch instruction. Performance of method 300 then proceeds to block 335.

At block 335, processor 108 is configured to determine override notification settings. The nature of the performance of block 335 is not particularly limited. For example, in addition to profiles 200, memory 112 can store an override profile in association with application 152 defining one or more notification signals to be generated when an incoming message matches a watch instruction. In some embodiments, override notification settings can be stored in database 164. Thus, for example, each record of database 164 can contain, in addition to the identifiers shown in Figure 5, notification settings as shown in Figure 2. In other embodiments, each record of database 164 can contain a profile identifier referring to a profile in database 160.

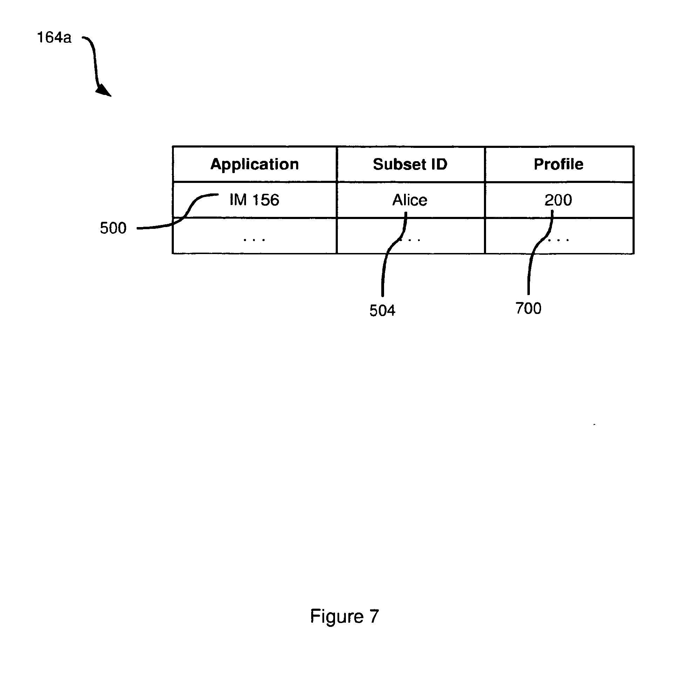

Turning to Figure 7, an example database 164a is shown. Database 164a is a modified version of database 164 as described above. In addition to identifiers 500 and 504, each record of database 164 also includes a profile identifier 700, indicating that at block 335, the settings of profile 200 are to be used as override settings.

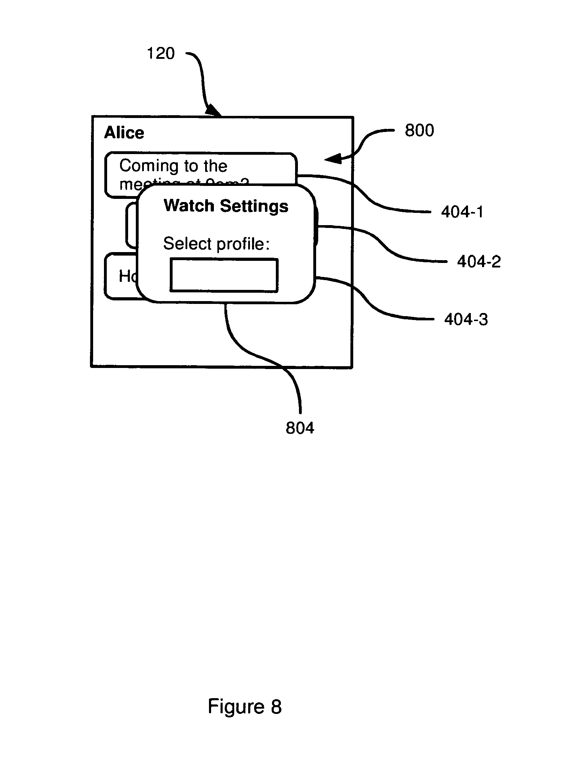

Referring to Figure 8, in another example the override notification settings can be received during the performance of method 300. Figure 8 shows an interface 800 generated on display 120 under the control of processor 108. Processor 108 can be configured to generate interface 800 following a selection of menu option 412 at block 305 and the transmission of the watch instruction at block 310. Interface 800 includes both the representations of messages 404 seen in interface 400 (which are generated via the execution of application 156), and an overlay 804 generated via the execution of application 152. Overlay 804 contains a field, such as a drop-down menu, for receiving a selection of which notification profile from database 160 to associate with the watch instruction to be stored in database 164. In other examples, explicit notification settings (such as those shown in Figure 2) can be entered into overlay 804 instead of the profile selection shown in Figure 8. For example, overlay 804 can include fields for receiving input data defining a speaker volume, a number of LED flashes, a frequency of such flashes, a name of a tone to be played on speaker 128, and the like.

Returning to Figure 3, having determined override notification settings, processor is configured to perform block 340, at which one or more notification signals are generated via the output devices of communication device 104, according to the override notification settings determined at block 335. Thus, in the present example, at block 340 a notification signal would be generated as discussed above in connection with profile 200.

Returning briefly to block 330, if the determination is negative (that is, if the new message does not match any watch instructions), the performance of method 300 proceeds to block 345, at which processor 108 is configured to determine notification settings for the new message by consulting the active profile of database 160, before generating a notification signal at block 340.

Thus, in brief, processor 108 is configured to receive, during the execution of application 156, instructions to implement different notification behaviour than that normally prescribed by application 152 in conjunction with database 160, for certain message subsets. Although application 156 is discussed above, it is contemplated that a wide variety of other applications can also be executed by processor 108 during the performance of method 300. In other words, application 152 can be invoked from a variety of other applications, to provide override notification settings, so long as those applications include the "watch" option 412. Similarly, processor 108 can be configured to control display 120 to generate interfaces that include representations of application 152 (such as overlay 804) in combination with representations of any of a variety of applications other than application 156 (as shown in Figure 8).

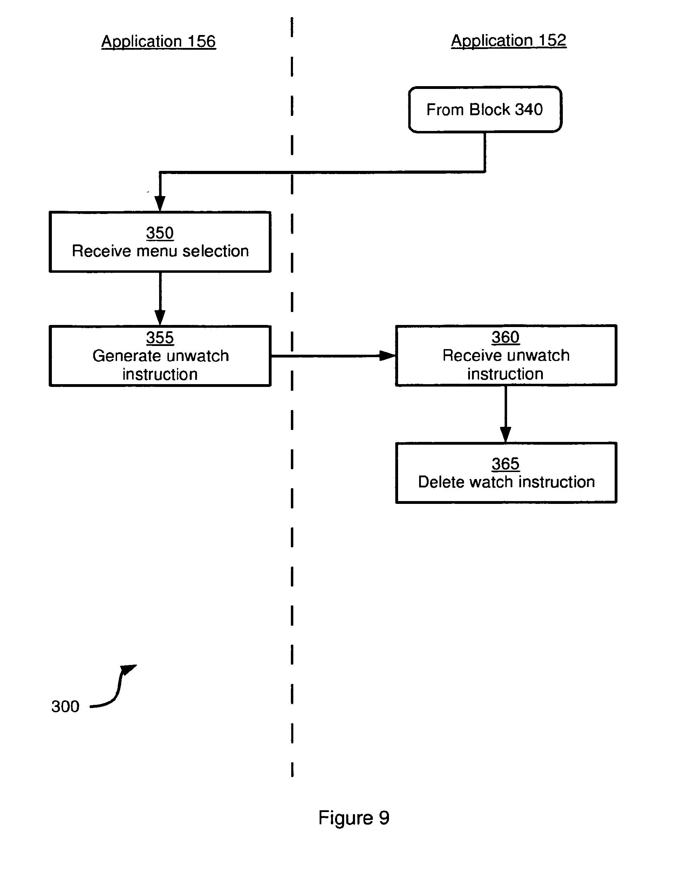

Turning now to Figure 9, a continuation of method 300 is shown. It is contemplated that after the performance of block 340 of method 300, processor 108 can be configured to receive a watch removal, or "unwatch", instruction generated via the execution of application 156. For example, processor 108 can be configured to replace menu option 412 with an unwatch menu option after menu option 412 has been selected. Upon receiving a selection of the unwatch menu option at block 350, processor 108 can be configured to generate an unwatch instruction at block 355 and, via the execution of application 152, to receive the unwatch instruction at block 360 and delete the corresponding record from database 164 at block 365. The unwatch instruction can include the same identifiers as the earlier watch instruction, and processor 108 is therefore configured, at block 365, to delete any watch instruction from database 164 that matches the identifiers of the unwatch instruction. As a result, the notification behaviour of communication device 104 will have been returned to "normal" for the message subset that includes messages 404 ("normal" meaning the notification behaviour specified by database 160 and executed through the performance of blocks 345 and 340 of method 300).

Variations to the above functionality are contemplated. For example, the "watch" and override notification settings need not be limited to messaging applications. For example, a web browser can include a watch menu option similar to option 412 in connection with an interface representing a web page. As a further example, telephony applications, games and the like can also incorporate watch menu options. Therefore, the subset identified by a watch instruction need not be messages, but can be any subset of data stored in association with the application. Further, for example in the case of a game, the performance of block 320 need not involve the receipt of a message from communication device 144. Instead, the performance of block 320 can include the detection of an event at communication device 104, the event generated via the execution of the game.

It will now be apparent that the above functionality allows specific subsets of messages (or other events) to lead to the generation of notification signals that are different from the notification signals than would otherwise have been generated based solely on the active profile from database 160. Additionally, in some embodiments, processor 108 can be configured to automatically disable all notification signals other than those generated at blocks 335 and 340 (rather than 345 and 340), for example by selecting a "silent" profile as the active profile in database 160 in response to receipt of a watch instruction at block 315.

In a further example variation, processor 108 can be configured, via the execution of application 152, to aggregate notification requests that result in an affirmative determination at block 330. For example, such notification requests can be stored for a predetermined period of time before proceeding to block 340, such that one notification signal, at most, is generated each time the predetermined time period elapses, regardless of how many notification requests have been received in the interim.

In another example variation, processor 108 can be configured to store watch instructions via the execution of application 156 (that is, the application in which the watch menu option 412 was selected), rather than application 152. In such embodiments, processor 108 is therefore configured to perform block 315 via the execution of application 156 and to store the watch instruction in a database associated with application 156. In addition, before generating a request as described above in connection with block 320, processor 108 is configured to determine whether the new message received at block 320 matches any watch instructions, similarly to block 330 as described above. If the determination is affirmative, then processor 108 is configured to generate a notification request including a flag or other indicator. Via execution of application 152, processor 108 is configured to determine whether notification requests received at block 325 include such a flag or not. When a request includes the flag, processor 108 proceeds to block 335, and otherwise proceeds to block 345. That is, processor 108 does not perform block 330 as described above, since a determination which replaces the determination of block 330 was already performed via execution of application 156.

Those skilled in the art will appreciate that in some embodiments, the functionality of applications 152 and 156 may be implemented using preprogrammed hardware or firmware elements (e.g., application specific integrated circuits (ASICs), electrically erasable programmable read-only memories (EEPROMs), etc.), or other related components.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method (300) in a communication device (104) having a processor (108), a memory (112) and at least one output device (120, 128), the method comprising:
executing a notification application at the processor to receive a watch instruction (315) generated at the processor via execution of an other application, the watch instruction including an identifier of the other application and an identifier for a subset of data stored in association with the other application;
storing the watch instruction in the memory (315);
executing the notification application at the processor to receive a notification request (325) generated at the processor via execution of the other application, the notification request including an application identifier and a data identifier;
determining (330) at the processor whether the data identifier matches the subset identifier and whether the application identifier matches the identifier of the other application; and,
when the determination is affirmative, controlling the at least one output device at the processor to generate (340) a notification signal according to override notification settings (335) stored in the memory in association with the watch instruction.

2. The method (300) of claim 1, further comprising:
prior to receiving the watch instruction, controlling a display of the communication device, via execution of the other application, to generate an interface including a selectable watch menu option; and
receiving input data at the processor representative of a selection of the watch menu option (305).

3. The method (300) of claim 1 or claim 2, further comprising:
when the determination is negative, controlling the at least one output device at the processor to generate a notification signal (340) according to notification settings (345) stored in the memory.

4. The method (300) of any one of claims 1 to 3, further comprising:
executing the notification application at the processor to receive an unwatch instruction (360) generated at the processor via execution of the other application, the unwatch instruction including a further application identifier and a further identifier for a subset of data stored in association with the other application;
determining whether the stored watch instruction matches the unwatch instruction; and
when the determination is affirmative, deleting (365) the watch instruction from the memory.

5. The method (300) of any one of claims 1 to 4, further comprising:
following the receipt of the watch instruction, controlling a display of the communication device, via execution of the notification application, to generate an interface (800) including at least one field for receiving input data representing the override notification settings; and
storing the override notification settings in the memory.

6. The method (300) of any one of claims 1 to 5, wherein the other application is a messaging application (156) and wherein the subset of data is a subset of messages stored in association with the messaging application.

7. The method (300) of claim 6, wherein the notification request is generated in response to the receipt of a new message (320) at the communication device, and wherein the data identifier is a message identifier for the new message.

8. A communication device (104), comprising:
a memory (112);
at least one output device (120, 128); and
a processor (108) interconnected with the memory and the at least one output device, the processor configured to execute a notification application (152) and an other application (156);
the processor configured, via execution of the notification application, to receive a watch instruction (315) generated via execution of the other application, the watch instruction including an identifier of the other application and an identifier for a subset of data stored in association with the other application;
the processor further configured to store the watch instruction in the memory;
the processor further configured, via execution of the notification application, to receive a notification request (325) generated via execution of the other application, the notification request including an application identifier and a data identifier;
the processor further configured to determine (330) whether the data identifier matches the subset identifier and whether the application identifier matches the identifier of the other application; and, when the determination is affirmative, to control the at least one output device to generate a notification signal (340) according to override notification settings (335) stored in the memory in association with the watch instruction.

9. The communication device (104) of claim 8, further comprising a display (120) interconnected with the processor (108); the processor further configured to:
prior to receiving the watch instruction, control the display, via execution of the other application, to generate an interface (400) including a selectable watch menu option (412); and
receive input data representative of a selection of the watch menu option (305).

10. The communication device (104) of claim 8 or claim 9, the processor further configured to:
when the determination is negative, control the at least one output device to generate a notification signal (340) according to notification settings (345) stored in the memory.

11. The communication device (104) of any one of claims 8 to 10, the processor further configured to:
via execution of the notification application, receive an unwatch instruction generated (360) via execution of the other application, the unwatch instruction including a further application identifier and a further identifier for a subset of data stored in association with the other application;
determine whether the stored watch instruction matches the unwatch instruction;
and
when the determination is affirmative, delete (365) the watch instruction from the memory.

12. The communication device (104) of any one of claims 8 to 11, further comprising a display (120) interconnected with the processor;
the processor further configured to:
following the receipt of the watch instruction, control the display of the communication device, via execution of the notification application, to generate an interface (800) including at least one field for receiving input data representing the override notification settings; and
store the override notification settings in the memory.

13. The communication device (104) of any one of claims 8 to 12, wherein the other application is a messaging application (156) and wherein the subset of data is a subset of messages stored in association with the messaging application.

14. The communication device (104) of claim 13, wherein the notification request is generated in response to the receipt of a new message (320) at the communication device, and wherein the data identifier is a message identifier for the new message.

15. A non-transitory computer readable medium (112) storing a plurality of computer readable instructions (152, 156) executable by a processor (108) of a communication device (104) having a memory and at least one output device (120, 128), for implementing the method of any one of claims 1 to 7.

## Patentansprüche

1. Ein Verfahren (300) in einer Kommunikationsvorrichtung (104) mit einem Prozessor (108), einem Speicher (112) und mindestens einer Ausgabevorrichtung (120, 128), wobei das Verfahren umfasst:
Ausführung einer Benachrichtigungsanwendung an dem Prozessor, um eine Beobachtungsinstruktion (315) zu erhalten, die an dem Prozessor mittels Ausführung einer anderen Anwendung erzeugt wird, wobei die Beobachtungsinstruktion eine Kennung der anderen Anwendung und eine Kennung für eine Untermenge von Daten enthält, die in Verbindung mit der anderen Anwendung gespeichert sind;
Speichern der Beobachtungsinstruktion in dem Speicher (315);
Ausführen der Benachrichtigungsanwendung an dem Prozessor, um eine Benachrichtigungsanfrage (325) zu erhalten, die an dem Prozessor mittels Ausführung der anderen Anwendung erzeugt wird, wobei die Benachrichtigungsanfrage eine Anwendungskennung und eine Datenkennung enthält;
Bestimmen (330) an dem Prozessor, ob die Datenkennung mit der Untermengenkennung übereinstimmt und ob die Anwendungskennung mit der Kennung der anderen Anwendung übereinstimmt; und
wenn die Bestimmung bejaht wird, Steuern der zumindest einen Ausgabevorrichtung an dem Prozessor zum Erzeugen (340) eines Benachrichtigungssignals gemäß von Überschreibnachrichteneinstellungen (335), die in dem Speicher in Verbindung mit der Beobachtungsinstruktion gespeichert sind.

2. Das Verfahren (300) nach Anspruch 1, ferner umfassend:
vor Erhalt der Beobachtungsinstruktion, Steuern einer Anzeige der Kommunikationsvorrichtung mittels Ausführung der anderen Anwendung, um eine Schnittstelle zu erzeugen, die eine wählbare Beobachtungsmenüoption enthält; und
Erhalten von Eingangsdaten an dem Prozessor, die eine Auswahl der Beobachtungsmenüoption (305) repräsentieren.

3. Das Verfahren (300) nach Anspruch 1 oder Anspruch 2, ferner umfassend:
wenn die Bestimmung negativ ist, Steuerung der zumindest einen Ausgabevorrichtung an dem Prozessor, um ein Benachrichtigungssignal (340) gemäß in dem Speicher gespeicherten Benachrichtigungseinstellungen (345) zu erzeugen.

4. Das Verfahren (300) nach einem der Ansprüche 1 bis 3, ferner umfassend:
Ausführen der Benachrichtigungsanwendung an dem Prozessor, um eine Nichtbeobachtungsinstruktion (360) zu erhalten, die an dem Prozessor mittels Ausführung der anderen Anwendung erzeugt wird, wobei die Nichtbeobachtungsinstruktion eine weitere Anwendungskennung und eine weitere Kennung für eine Untermenge von Daten enthält, die in Verbindung mit der anderen Anwendung gespeichert sind;
Bestimmen, ob die gespeicherte Beobachtungsinstruktion der Nichtbeobachtungsinstruktion entspricht; und
wenn die Bestimmung bejaht wird, Löschen (365) der Beobachtungsinstruktion aus dem Speicher.

5. Das Verfahren (300) nach einem der Ansprüche 1 bis 4, ferner umfassend:
nach Erhalt der Beobachtungsinstruktion, Steuern einer Anzeige der Kommunikationsvorrichtung mittels Ausführung der Benachrichtigungsanwendung, um eine Schnittstelle (800) zu erzeugen, die mindestens ein Feld zum Erhalten von Eingangsdaten, die die Überschreibnachrichteneinstellungen repräsentieren, enthält; und
Speichern der Überschreibnachrichteneinstellungen in dem Speicher.

6. Das Verfahren (300) nach einem der Ansprüche 1 bis 5, wobei die andere Anwendung eine Messaging-Anwendung (156) ist, und wobei die Untermenge von Daten eine Untermenge von Nachrichten ist, die in Verbindung mit der Messaging-Anwendung gespeichert sind.

7. Das Verfahren (300) nach Anspruch 6, wobei die Benachrichtigungsanforderung in Reaktion auf den Erhalt einer neuen Nachricht (320) an der Kommunikationsvorrichtung erzeugt wird; und wobei die Datenkennung eine Nachrichtenkennung für die neue Nachricht ist.

8. Eine Kommunikationsvorrichtung (104), umfassend:
einen Speicher (112);
zumindest eine Ausgabevorrichtung (120, 128); und
einen Prozessor (108), der mit dem Speicher und der zumindest einen Ausgabevorrichtung verbunden ist, wobei der Prozessor konfiguriert ist, eine Benachrichtigungsanwendung (152) und eine andere Anwendung (156) auszuführen; wobei
der Prozessor konfiguriert ist, um mittels Ausführung der Benachrichtigungsanwendung eine Beobachtungsinstruktion (315) zu erhalten, die mittels Ausführung der anderen Anwendung erzeugt wird, wobei die Beobachtungsinstruktion eine Kennung der anderen Anwendung und eine Kennung für eine Untermenge von Daten umfasst, die in Verbindung mit der anderen Anwendung gespeichert sind;
der Prozessor ferner konfiguriert ist, um die Beobachtungsinstruktion in dem Speicher zu speichern;
der Prozessor ferner konfiguriert ist, um mittels Ausführung der Benachrichtigungsanwendung, eine Benachrichtigungsanfrage (325), die mittels Ausführung der anderen Anwendung erzeugt wird, zu erhalten, wobei die Benachrichtigungsanfrage eine Anwendungskennung und eine Datenkennung enthält;
der Prozessor ferner konfiguriert ist, zum Bestimmen (330), ob die Daten-kennung mit der Untermengenkennung übereinstimmt, und ob die Anwendungskennung mit der Kennung der anderen Anwendung übereinstimmt; und, wenn die Bestimmung bejahend ist, um die zumindest eine Ausgabevorrichtung zu steuern, um ein Benachrichtigungssignal (340) gemäß Überschreibnachrichteneinstellungen (335) zu erzeugen, die in dem Speicher in Verbindung mit der Beobachtungsinstruktion gespeichert sind.

9. Die Kommunikationsvorrichtung (104) nach Anspruch 8, ferner umfassend eine Anzeige (120), die mit dem Prozessor (108) verbunden ist, wobei der Prozessor ferner konfiguriert ist, um:
vor dem Erhalt der Beobachtungsinstruktion, die Anzeige mittels Ausführung der anderen Anwendung zu steuern, um eine Schnittstelle (400) zu erzeugen, die eine auswählbare Beobachtungmenüoption (412) enthält; und
Eingangsdaten zu erhalten, die eine Auswahl der Beobachtungmenüoption (305) repräsentieren.

10. Die Kommunikationsvorrichtung (104) nach Anspruch 8 oder 9, wobei der Prozessor ferner konfiguriert ist, um:
wenn die Bestimmung negativ ist, die zumindest eine Ausgabevorrichtung zu steuern, um ein Benachrichtigungssignal (340) gemäß der Benachrichtigungseinstellungen (345), die in dem Speicher gespeichert sind, zu erzeugen.

11. Die Kommunikationsvorrichtung (104) nach einem der Ansprüche 8 bis 10, wobei der Prozessor ferner konfiguriert ist, um:
mittels Ausführung der Benachrichtigungsanwendung eine Nichtbeobachtungsinstruktion (360) zu erhalten, die mittels Ausführen der anderen Anwendung generiert wird, wobei die Nichtbeobachtungsinstruktion eine weitere Anwendungskennung und eine weitere Kennung für eine Untermenge von Daten enthält, die in Verbindung mit der anderen Anwendung gespeichert sind;
zu bestimmen, ob die gespeicherte Beobachtungsinstruktion mit der Nichtbeobachtungsinstruktion übereinstimmt; und
wenn die Bestimmung bejaht wird, die Beobachtungsinstruktion aus dem Speicher zu löschen (365).

12. Die Kommunikationsvorrichtung (104) nach einem der Ansprüche 8 bis 11, ferner umfassend eine Anzeige (120), die mit dem Prozessor verbunden ist;
wobei der Prozessor ferner konfiguriert ist, um:
nach Erhalt der Beobachtungsinstruktion, mittels Ausführung der Benachrichtigungsanwendung die Anzeige der Kommunikationsvorrichtung zu steuern, um eine Schnittstelle (800) zu erzeugen, die zumindest ein Feld zum Erhalten von Eingangsdaten enthält, die die Überschreibnachrichteneinstellungen repräsentieren; und
die Überschreibnachrichteneinstellungen in dem Speicher zu speichern.

13. Die Kommunikationsvorrichtung (104) nach einem der Ansprüche 8 bis 12, wobei die andere Anwendung eine Messaging-Anwendung (156) ist, und wobei die Untermenge von Daten eine Untermenge von Nachrichten ist, die in Verbindung mit der Messaging-Anwendung gespeichert sind.

14. Die Kommunikationsvorrichtung (104) nach Anspruch 13, wobei die Benachrichtigungsanforderung in Reaktion auf den Empfang einer neuen Nachricht (320) an der Kommunikationsvorrichtung erzeugt wird, und wobei die Datenkennung eine Nachrichtenkennung für die neue Nachricht ist.

15. Ein nicht-transitorisches, computerlesbares Medium (112), das eine Vielzahl von computerlesbaren Instruktionen (152, 156) enthält, die durch einen Prozessor (108) einer Kommunikationsvorrichtung (104) ausführbar sind, die einen Speicher und zumindest eine Ausgabevorrichtung (120,128) umfasst, für die Implementierung des Verfahrens nach einem der Ansprüche 1 bis 7.

## Revendications

1. Procédé (300) dans un dispositif de communication (104) ayant un processeur (108), une mémoire (112) et au moins un dispositif de sortie (120, 128), le procédé comprenant :
l'exécution d'une application de notification au niveau du processeur pour recevoir une instruction watch (315) générée au niveau du processeur via l'exécution d'une autre application, l'instruction watch comprenant un identificateur de l'autre application et un identificateur pour un sous-ensemble de données stocké en association avec l'autre application ;
le stockage de l'instruction watch dans la mémoire (315) ;
l'exécution de l'application de notification au niveau du processeur pour recevoir une demande de notification (325) générée au niveau du processeur via l'exécution de l'autre application, la demande de notification comprenant un identificateur d'application et un identificateur de données ;
la détermination (330) au niveau du processeur de si l'identificateur de données concorde avec l'identificateur de sous-ensemble et de si l'identificateur d'application concorde avec l'identificateur de l'autre application ; et,
lorsque la détermination est affirmative, la commande du au moins un dispositif de sortie au niveau du processeur pour générer (340) un signal de notification selon des réglages de notification de priorité (335) stockés dans la mémoire en association avec l'instruction watch.

2. Procédé (300) selon la revendication 1, comprenant en outre :
avant la réception de l'instruction watch, la commande d'un afficheur du dispositif de communication, via l'exécution de l'autre application, pour générer une interface comprenant une option de menu watch sélectionnable ; et
la réception de données d'entrée au niveau du processeur représentatives d'une sélection de l'option de menu watch (305).

3. Procédé (300) selon la revendication 1 ou la revendication 2, comprenant en outre :
lorsque la détermination est négative, la commande du au moins un dispositif de sortie au niveau du processeur pour générer un signal de notification (340) selon des réglages de notification (345) stockés dans la mémoire.

4. Procédé (300) selon l'une quelconque des revendications 1 à 3, comprenant en outre :
l'exécution de l'application de notification au niveau du processeur pour recevoir une instruction unwatch (360) générée au niveau du processeur via l'exécution de l'autre application, l'instruction unwatch comprenant un autre identificateur d'application et un autre identificateur pour un sous-ensemble de données stocké en association avec l'autre application ;
la détermination de si l'instruction watch stockée concorde avec l'instruction unwatch ; et
lorsque la détermination est affirmative, la suppression (365) de l'instruction watch de la mémoire.

5. Procédé (300) selon l'une quelconque des revendications 1 à 4, comprenant en outre :
suite à la réception de l'instruction watch, la commande d'un afficheur du dispositif de communication, via l'exécution de l'application de notification, pour générer une interface (800) comprenant au moins un champ destiné à recevoir des données d'entrée représentant les réglages de notification de priorité ; et
le stockage des réglages de notification de priorité dans la mémoire.

6. Procédé (300) selon l'une quelconque des revendications 1 à 5, dans lequel l'autre application est une application de messagerie (156) et dans lequel le sous-ensemble de données est un sous-ensemble de messages stocké en association avec l'application de messagerie.

7. Procédé (300) selon la revendication 6, dans lequel la demande de notification est générée en réponse à la réception d'un nouveau message (320) au niveau du dispositif de communication, et dans lequel l'identificateur de données est un identificateur de message pour le nouveau message.

8. Dispositif de communication (104), comprenant :
une mémoire (112) ;
au moins un dispositif de sortie (120, 128) ; et
un processeur (108) interconnecté avec la mémoire et le au moins un dispositif de sortie, le processeur configuré pour exécuter une application de notification (152) et une autre application (156) ;
le processeur configuré, via l'exécution de l'application de notification, pour recevoir une instruction watch (315) générée via l'exécution de l'autre application, l'instruction watch comprenant un identificateur de l'autre application et un identificateur pour un sous-ensemble de données stocké en association avec l'autre application ;
le processeur en outre configuré pour stocker l'instruction watch dans la mémoire ;
le processeur en outre configuré, via l'exécution de l'application de notification, pour recevoir une demande de notification (325) générée via l'exécution de l'autre application, la demande de notification comprenant un identificateur d'application et un identificateur de données ;
le processeur en outre configuré pour déterminer (330) si l'identificateur de données concorde avec l'identificateur de sous-ensemble et si l'identificateur d'application concorde avec l'identificateur de l'autre application ; et, lorsque la détermination est affirmative, pour commander le au moins un dispositif de sortie pour générer un signal de notification (340) selon des réglages de notification de priorité (335) stockés dans la mémoire en association avec l'instruction watch.

9. Dispositif de communication (104) selon la revendication 8, comprenant en outre un afficheur (120) interconnecté avec le processeur (108) ; le processeur en outre configuré pour :
avant la réception de l'instruction watch, commander l'afficheur, via l'exécution de l'autre application, pour générer une interface (400) comprenant une option de menu watch sélectionnable (412) ; et
recevoir des données d'entrée représentatives d'une sélection de l'option de menu watch (305).

10. Dispositif de communication (104) selon la revendication 8 ou la revendication 9, le processeur en outre configuré pour :
lorsque la détermination est négative, commander le au moins un dispositif de sortie pour générer un signal de notification (340) selon des réglages de notification (345) stockés dans la mémoire.

11. Dispositif de communication (104) selon l'une quelconque des revendications 8 à 10, le processeur en outre configuré pour :
via l'exécution de l'application de notification, recevoir une instruction unwatch générée (360) via l'exécution de l'autre application, l'instruction unwatch comprenant un autre identificateur d'application et un autre identificateur pour un sous-ensemble de données stocké en association avec l'autre application ;
déterminer si l'instruction watch stockée concorde avec l'instruction unwatch ; et
lorsque la détermination est affirmative, supprimer (365) l'instruction watch de la mémoire.

12. Dispositif de communication (104) selon l'une quelconque des revendications 8 à 11, comprenant en outre un afficheur (120) interconnecté avec le processeur ;
le processeur en outre configuré pour :
suite à la réception de l'instruction watch, commander l'afficheur du dispositif de communication, via l'exécution de l'application de notification, pour générer une interface (800) comprenant au moins un champ destiné à recevoir des données d'entrée représentant les réglages de notification de priorité ; et
stocker les réglages de notification de priorité dans la mémoire.

13. Dispositif de communication (104) selon l'une quelconque des revendications 8 à 12, dans lequel l'autre application est une application de messagerie (156) et dans lequel le sous-ensemble de données est un sous-ensemble de messages stocké en association avec l'application de messagerie.

14. Dispositif de communication (104) selon la revendication 13, dans lequel la demande de notification est générée en réponse à la réception d'un nouveau message (320) au niveau du dispositif de communication, et dans lequel l'identificateur de données est un identificateur de message pour le nouveau message.

15. Support lisible par ordinateur non transitoire (112) stockant une pluralité d'instructions lisibles par ordinateur (152, 156) exécutables par un processeur (108) d'un dispositif de communication (104) ayant une mémoire et au moins un dispositif de sortie (120, 128), pour mettre en oeuvre le procédé selon l'une quelconque des revendications 1 à 7.
